# EUROPEAN PATENT APPLICATION

(11) **EP 4 552 842 A1**
(43) Date of publication of application: **14.05.2025**
(21) Application number: 22956695.5
(22) Date of filing: 31.08.2022
(51) Int. Cl.: B32B 27/00

(54) **METHOD FOR PRODUCING TRANSPARENT MULTILAYERED PRODUCT**

(71) Applicant: Renais Co., Ltd., Mihara-shi, Hiroshima 729-0473 (JP)
(72) Inventor: IWAI, Kazufumi, Mihara-shi, Hiroshima 729-0473 (JP)
(74) Representative: Kramer Barske Schmidtchen Patentanwälte PartG mbB
(86) International application number: PCT/JP2022/032802
(87) International publication number: WO 2024/047806

(57) **Abstract**

Provided is a method for producing a see-through or daylighting, transparent multilayered product for use as the windshield of a transport machine such as a vehicle, e.g., a motor vehicle or a railroad car, an air plane, or a ship. A silicone-based resin layer 3 is formed over a resin substrate 1. A polysilazane mixture obtained by mixing an organopolysilazane and a perhydropolysilazane so that the solid proportion of the former to the latter, O/P, is 1-25 wt% is applied to the surface of the silicone of the silicone-based resin layer 3 and cured to form a polysilazane mixture layer 4. The coated resin substrate 1 is irradiated from above the polysilazane mixture layer 4 with vacuum ultraviolet light having a wavelength of 200 nm or less, thereby modifying the silicone-based resin layer through the polysilazane mixture layer 4 to convert some thereof into a silicon dioxide film.

## Description

### TECHNICAL FIELD

The present invention relates to a method for producing a see-through or daylighting, transparent multilayered product for use as a windshield of a transport machine such as a vehicle, e.g., a motor vehicle or a railroad car, an air plane, or a ship.

### BACKGROUND ART

Windshield glass of transport machines such as vehicles, e.g., motor vehicles or railroad cars, air planes, or ships is used in environments where it is exposed to outdoor conditions or continuously rubbed by wipers. Resin substrates such as polycarbonate are lighter than glass substrates and are expected to replace glass substrates as window materials for see-through or daylighting, etc. While the resin substrate has excellent moldability, the surface is extremely easily scratched. Therefore, to enable the resin substrate to be used in harsh environments such as the windshield glass, a modified film based on silicon dioxide is being formed on the resin substrate to improve its scratch resistance. This modified layer is made by applying and forming an acrylic resin or hard coat on the surface of the resin substrate to form a hard thin film.

For example, according to the patent document 1, a siloxane resin is applied by a dip-coating method and its surface is irradiated with vacuum ultraviolet light to form a modified film mainly composed of silicon dioxide. This document 1 discloses a problem of cracking when the thickness of the modified film is increased to 0.6 µm or more.

Patent document 2 discloses a multilayered product as a window material for vehicles, wherein a hard coat layer (I) containing a siloxane-based polymer component and an organic polymer component is laminated on a plastic substrate, and a silica film (II) converted from polysilazane is further formed on the hard coat layer (I). Polysilazane is an inorganic polymer soluble in organic solvents with -(SiH2NH)- as a basic unit.

In the multilayered product according to this patent document 2, the hard coat layer (I) is formed so that the siloxane-based polymer component is relatively more present on the side in contact with the silica film (II) and the organic polymer component is relatively more present on the substrate side. The hard coat layer (I) is formed by applying a hard coat layer and then curing it by active energy ray irradiation. The silica film (II) is formed by applying a polysilazane-containing coating composition. Adhesion to the silica film (II) is improved by having relatively more siloxane-based polymer components present on the side in contact with the silica film (II).

Patent document 3 concerns a technology related to flexible gas barrier films used in electronic devices such as solar cells and liquid crystals. According to this technology, it is mentioned that a barrier layer containing inorganic material is formed by applying a coating solution of a composition containing polysilazane on an adjacent layer, and then applying a modification process by vacuum ultraviolet irradiation. According to this document 3, by providing an adjacent layer, no silanol groups, etc. are formed in the polysilazane coating film before vacuum ultraviolet irradiation, and subsequent vacuum ultraviolet irradiation breaks molecular bonds of polysilazane, resulting in ceramization (silica modification) of the coating film surface. This document 3 states that when the polysilazane layer has a thickness of 150 nm, a film is created in which a continuous region exists in the depth direction of 2 nm or more in which the ratio of Si, N, and O atoms is approximately constant in a region of about 5 to 100 nm (SiO₂ thermal oxide film equivalent value).

In addition, while the document 3 states that perhydropolysilazane is particularly preferred as the polysilazane, it also suggests using a mixture of perhydropolysilazane and organopolysilazane. However, only an example of perhydropolysilazane is shown in its examples.

In the method for producing transparent multilayered product according to patent document 4, a composition mainly composed of polysilazane is applied to the surface of a silicone-based resin layer formed on a resin substrate, which is then cured to form a cured polysilazane layer converted into silica, and vacuum ultraviolet light having a wavelength of 200 nm or less from above the cured polysilazane layer to modify a part of the silicone-based resin layer into a modified film of silicon dioxide through the cured polysilazane layer. When the silicone-based resin layer is irradiated with vacuum ultraviolet light, the gas that volatilizes diffuses into the resin substrate due to the gas barrier properties of the cured polysilazane layer, and therefore the gas cannot roughen and scratch the surface of the resin substrate. According to this, the performance against cracking and peeling in an ultra-accelerated weather resistance test (SUV) can be improved.

This document 4 also discloses that perhydropolysilazane is preferable as the polysilazane, but also suggests the possibility of selecting organopolysilazane. However, only an example of perhydropolysilazane is shown in its examples.

Perhydropolysilazane is a polysilazane (also referred to as PHPS) in which R1, R2 and R3 of the following general formula (Chemical Formula 1) are all hydrogen atoms.

Organopolysilazane is a polysilazane (also referred to as OPSZ) in which the hydrogen moieties bonded to Si in the following general formula (Chemical Formula 1) are partially substituted with alkyl groups, alkenyl groups, cycloalkyl groups, aryl groups, alkyl-silyl groups, alkylamino groups, alkoxy groups, or the like.

(Chemical Formula 1) - Si ( R1 ) ( R2 ) -N ( R 3) -

### RELATED ART DOCUMENTS

### PATENT DOCUMENTS

Patent document 1: Japanese Patent No. 4536824
Patent document 2: Japanese Patent No. 625685
Patent document 3: Japanese Patent No. 5935263
Patent document 4: Japanese Unexamined Patent Application Publication No. 2020-104462

### SUMMARY OF THE INVENTION

### PROBLEMS TO BE SOLVED BY THE INVENTION

In the patent document 4, vacuum ultraviolet light is delivered to the interface between the cured polysilazane layer and the silicone-based resin layer to induce an interfacial reaction, and part of the silicone-based resin layer is converted into a silicon dioxide film through the cured polysilazane layer, thereby improving the adhesiveness of the silicone-based resin layer. As a result, it was shown that the weather resistance and heat resistance were improved compared to when the silicon-base resin layer not coated with polysilazane was irradiated with vacuum ultraviolet light.

The present applicant has made diligent studies to further improve weather resistance and heat resistance. In addition, in the patent document 4, the recommended film thickness of the polysilazane layer is 10 to 100 nm, and since controlling the quality of the film thickness within such an extremely narrow range for the wide area and curved surface of the windshield glass of a transport machine such as a vehicle, e.g., a motor vehicle or a railroad car, an air plane, or a ship is costly, the present applicant also considered improving this.

The purpose of the present invention is to provide a method for producing a see-through or daylighting, transparent multilayered product for use as windshield glass of a transport machine such as a vehicle, e.g., a motor vehicle or a railroad car, an air plane, or a ship.

### MEANS TO SOLVE THE PROBLEM

The method for producing the transparent multilayered product according to the present invention comprises steps of forming a silicone-based resin layer on a resin substrate, forming a polysilazane mixture layer by applying and curing polysilazane mixture in which a solid content ratio (O/P ratio) of organopolysilazane to perhydropolysilazane is 1 wt% or more and 25 wt% or less on a surface of the silicone-based resin layer, and modifying a portion of the silicone-based resin layer into a modified film of silicon dioxide through the polysilazane mixture layer by irradiating vacuum ultraviolet light with a wavelength of 200 nm or less from above the polysilazane mixture layer.

### EFFECTS OF THE INVENTION

According to the present invention, it has been found that mixing organopolysilazane with perhydropolysilazane makes it easier to apply to the silicone-based resin layer than organopolysilazane alone. Next, the film thickness of the polysilazane mixture layer was examined when the applied and cured polysilazane mixture layer was irradiated with vacuum ultraviolet light having a wavelength of 200 nm or less, and by setting the film thickness to less than 565 nm, a transparent multilayered product having excellent SUV weather resistance could be obtained. Since the range of film thickness of the polysilazane mixture layer can be widened, it is possible to increase productivity and control the quality of the film thickness for the wide area and curved surface of the windshield glass of a transport machine such as a vehicle, e.g., a motor vehicle or a railroad car, an airplane, or a ship.

Furthermore, by adjusting the film thickness of the polysilazane layer after ultraviolet irradiation to 100 to 300 nm, a transparent multilayered product having excellent SUV weather resistance can be obtained.

### BRIEF DESCRIPTION OF THE DRAWINGS

FIG. 1 shows an example of spin-coating organopolysilazane onto a silicone-based resin layer;
FIG. 2 shows a schematic cross section of a transparent multilayered product produced by a modification method of the present invention;
FIG. 3 shows results of SUV weather resistance and heat resistance tests;
FIG. 4 shows test results of wear resistance when the O/P ratio is changed;
FIG. 5 shows test results of SUV weather resistance exerted by catalysts;
FIG. 6 shows test results regarding the effect of increasing the amount of vacuum ultraviolet light irradiation; and
FIG. 7 shows results of a heat resistance test, an SUV weather resistance test, and a taber wear test for each film thickness of polyshilazane mixture layer.

### BEST MODE FOR CARRYING OUT THE INVENTION

Perhydropolysilazane forms an inorganic coating film, whereas organopolysilazane forms an inorganic-organic hybrid coating film. Since the organopolysilazane coating film contains organic matter, it is expected that the toughness will be improved compared to the inorganic perhydropolysilazane coating film, and that cracking will be suppressed even when the film thickness is increased.

Therefore, the inventors attempted to use organopolysilazane as described in the patent document 4 by applying a composition containing organopolysilazane as a main component to the surface of a silicone-based resin layer formed on a resin substrate, curing the composition to form a polysilazane mixture layer converted into silica, and irradiating vacuum ultraviolet light having a wavelength of 200 nm or less from above the polysilazane mixture layer, and evaluated the prepared samples.

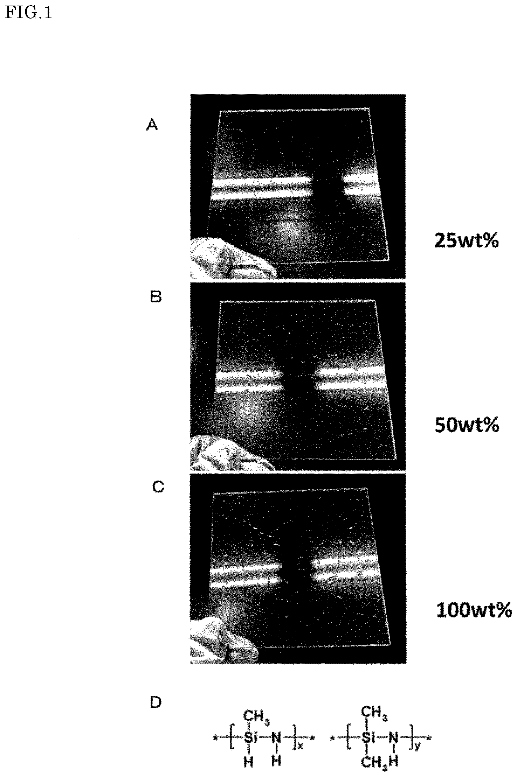

FIG. 1 shows an example in which organopolysilazane is applied to a silicone-based resin layer using spin coating. The silicone-based resin layer to be applied is a hard coat layer formed by applying a siloxane resin obtained by hydrolyzing a siloxane sol obtained through a condensation reaction using an alkoxysilane as a base, and then curing it using a dip coating method. The organopolysilazane used was selected as 1033 from the DURAZANE 1000 series manufactured by Merck Kommandate Gesellschaft Auf Aktien (DURAZANE is a registered trademark of the company). DURAZANE 1033 is a liquid low viscosity resin that does not require a solvent.

According to the patent document 3, organopolysilazane has improved adhesion to the underlying substrate material due to inclusion of an alkyl group such as a methyl group. However, in tests conducted by the applicant, DURAZANE 1033 was repelled and formed into water droplets, making it impossible to form a film. The samples tested were prepared by adding a solvent to undiluted solution of DURAZANE 1033 (FIG. 1C, 100 wt%) to adjust the ratio of DURAZANE 1033 to 25 wt% (FIG. 1A) and 50 wt% (FIG. 1B). Thus, organopolysilazanes are difficult in practice to apply to silicone-based resin layers. FIG. 1D is the nominal chemical formula.

Next, the inventors found that mixing organopolysilazane with perhydropolysilazane makes it easier to apply to the silicone-based resin layer than organopolysilazane alone. Even when the organic/inorganic ratio (O/P ratio) of the weight of the organopolysilazane solid content to the perhydropolysilazane solid was adjusted to three times (the weight of the organopolysilazane solid content was 300 to the weight of the perhydropolysilazane solid content was 100), a film having a thickness of 100 nm could be formed on the above-mentioned silicone-based resin layer by spin coating at 3000 rpm (1 minute). The perhydropolysilazane used here is Tresmile #100-15 (Tresmile is a registered trademark of Sanwa Kagaku Co.).

The present inventors then investigated using a sample in which organopolysilazane and perhydropolysilazane were mixed (hereinafter referred to as polysilazane mixture) to apply the polysilazane mixture to the surface of the silicone-based resin layer formed on the resin substrate, curing this to form a polysilazane mixture layer converted into silica, and irradiating vacuum ultraviolet light having a wavelength of 200nm or less from above the polysilazane mixture layer to modify a part of the silicone-based resin layer into a modified film of silicon dioxide through the polysilazane mixture layer.

In the patent document 4, the following phenomenon is observed, that is, when a silicone-based resin layer (hard coat layer) including a polymer having siloxane bonds is formed and then irradiated with vacuum ultraviolet light, the organic matter in the polymer volatilizes from the surface of the silicone-based resin layer and the surface of the modified film, which is mainly composed of silicon dioxide, increases. A phenomenon has been observed in which the surface roughness of the modified film increases. Although the initial surface roughness (Rmax) is 3 nm or less, when the irradiation energy reaches 8400 mJ/cm², the surface roughness (Rmax) exceeds 10 nm. The results of ultra-accelerated weather resistance tests (SUV) using metal halide lamps show that the time to cracking and peeling decreased with increasing the irradiation energy and the surface roughness. Therefore, one measure to further improve performance in the SUV weather resistance is to reduce this surface roughness.

When the polysilazane mixture was further applied to the surface of the comparative example before irradiation with vacuum ultraviolet light, the surface roughness was smoothed. Even when irradiated with vacuum ultraviolet light, the surface roughness (Rmax) was 3 nm or less and hardly changed at all. Therefore, the inventors have examined whether the use of the polysilazane mixture improves weather resistance and heat resistance compared to the use of perhydropolysilazanes alone (the patent document 4), or whether the cost of quality control of the film thickness can be reduced by making it possible to achieve a film thickness greater than the thickness of polysilazane film recommended in the patent document 4 (10 to 100 nm), even if the weather resistance and the heat resistance are the same level.

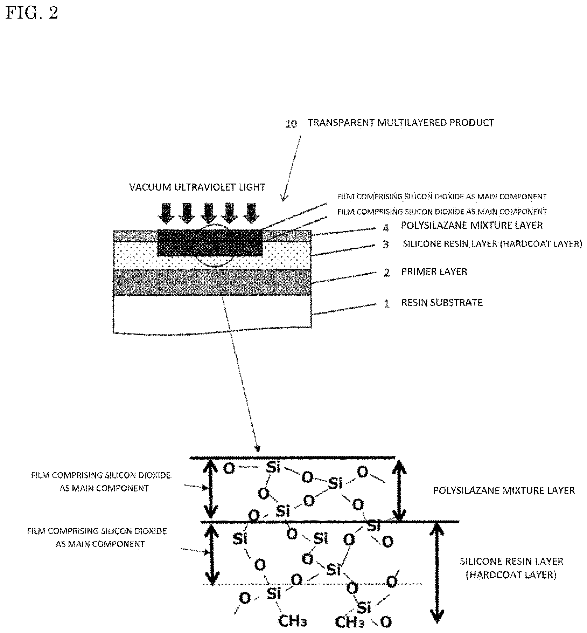

FIG. 2 is a view schematically showing a cross-section of a transparent multilayered product 10 produced by the modification method of the present invention. The transparent multilayered product 10 is composed of a resin substrate 1, a primer layer 2 formed thereon, a silicone-based resin layer 3 formed thereon, and a polysilazane mixture layer 4 formed thereon.

The resin substrate 1 is not particularly limited, but suitable materials include resins such as acrylic resin, polycarbonate, polyarylate, polystyrene, polyethylene terephthalate, or styrene-based polymers, or various olefin-based resins.

The primer layer 2 is provided for the purpose of improving adhesion between the resin substrate 1 and the silicone-based resin layer 3, improving impact resistance, etc., but in the present invention, it also has the effect of removing scratches on the surface of the resin substrate 1. Such the primer layer 2 can be formed, for example, by applying various resins such as polyester resin, acrylic resin, polyurethane resin, epoxy resin, melamine resin, polyolefin resin, urethane acrylate resin, etc. by a dip coating method and curing the resin.

Specifically, the silicone-based resin layer 3 can be formed by applying a siloxane resin obtained by hydrolyzing a siloxane sol obtained through a condensation reaction using an alkoxysilane as a base, by dip coating, and then curing the applied resin. Other polymers having siloxane bonds may be used as the silicone-based resin layer 3. The other polymers having siloxane bonds include acrylic polymers having siloxane bonds. Besides, if an acrylic polymer having siloxane bonds is used, the primer layer 2 is not required.

The polysilazane mixture layer 4 is formed by mixing organopolysilazane and perhydropolysilazane, diluting the mixed polysilazane(hereinafter, referred to as polysilazane mixture) with an appropriated solvent to adjust film thickness and viscosity, and applying the polysilazane mixture to the silicone-based resin layer 3 by a dipping method, a flow coating method, a spraying method, a spincoating method, or the like, and then curing the polysilazane mixture to convert it into a silica film. The mixed polysilazanes can be cured by leaving it at room temperature for several days (in experiments conducted by the applicant, no significant differences were detected in curing time (from 10 minutes to 3 days) and curing temperature (from room temperature to 120°C)).

Vacuum ultraviolet light having a wavelength of 200 nm or less, such as a xenon excimer lamp (vacuum ultraviolet light, wavelength 172 nm), is irradiated from above the polysilazane mixture layer 4. The vacuum ultraviolet light passes through the polysilazane mixture layer 4 and modifies the silicone-based resin layer 3 from the interface between the polysilazane mixture layer 4 and the silicone-based resin layer 3 into a film mainly composed of silicon dioxide. The modified film mainly composed of silicon dioxide is composed of the film thickness of the silicon dioxide film formed by the polysilazane mixture layer 4 and the film thickness of the silicon dioxide film modified from the silicon-based resin layer 3.

### (Experimental Example 1)

DURAZANE 1033 was used as the organopolysilazane, and Tresmile #100-15 from Sanwa Kagaku Co. was used as the perhydropolysilazane.

The organopolysilazane and the perhydropolysilazane were mixed, and seven types of samples with different organic/inorganic solids ratios (O/P weight ratio: O/P ratio) were prepared: O/P ratios of 1 wt% (organic g/inorganic g = 1 g/100 g), 5 wt% (organic g/inorganic g = 5 g/100 g), 10 wt% (organic g/inorganic g = 10 g/100 g), 25 wt% (organic g/inorganic g = 25 g/100 g), 50 wt% (organic g/inorganic g = 50 g/100 g), 75 wt% (organic g/inorganic g = 75 g/100 g), and 90 wt% (organic g/inorganic g = 90 g/100 g). Besides, since Tresmire #100-15 is sold diluted to 5 wt% with a solvent, the O/P ratio is not a ratio that includes the solvent, but a ratio of solid content excluding the solvent.

These were then diluted with dibutyl ether to a concentration of 5%. The silicone-based resin layer 3 shown in FIG. 2 was prepared, and the surface of the silicone-based resin layer 3 was spin-coated at 3000 rpm for 1 minute and cured to form a polysilazane mixture layer 4 having a thickness of 100 nm.

### (Comparative Example 1)

The silicone-based resin layer 3 was then irradiated with vacuum ultraviolet light at 2 J/cm² to modify the upper part of the silicone-based resin layer 3 into a film mainly composed of silicon dioxide.

### (Comparative Example 2)

Tresmile # 100-15, which is perhydropolysilazane, was applied to the silicone-based resin layer 3, and then irradiated with vacuum ultraviolet light at 2 J/cm² to modify the upper part of the silicone-based resin layer 3 into a film mainly composed of silicon dioxide. As mentioned above, Tresmire #100-15 is a chemical agent that is originally diluted to 5 wt% with a solvent. This comparative example 2 is a sample prepared according to the technique described in the patent document 4.

The above samples were subjected to an ultra-accelerated weather resistance test (SUV weather resistance) using a metal halide lamp, and the time until cracks or film peeling occurred was measured. In the SUV weather resistance test, the film was checked every 120 hours for cracks or peeling by combining irradiation, darkness, and water spray (data is shown in 120-hour increments in the figure). The SUV resistance test was targeted for 1,200 hours, and the heat resistance test for 1,000 hours.

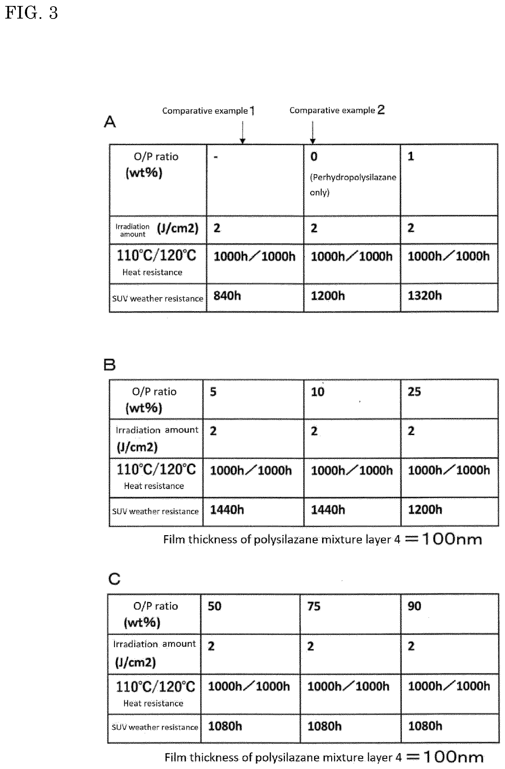

The results of SUV weather resistance and heat resistance tests are shown in FIG.3. In FIG. 3A, regarding the target time of 1200 hours for SUV weather resistance, comparative example 1 did not reach, but comparative example 2 did.

When the O/P ratio was 1 wt% or more and 25 wt% or less, the target time could be reached. On the other hand, when the O/P ratio exceeded 25 wt%, the effect tended to decrease to the same extent as in the comparative example 2 (perhydropolysilazane only, 0 wt%). As a result, the preferrable range of O/P ratio for SUV weather resistance is 1 wt% or more and 25 wt% or less.

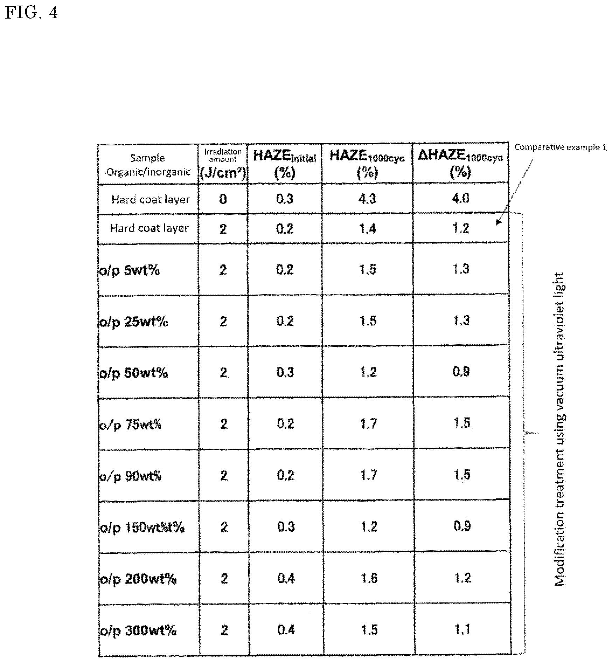

FIG. 4 shows the results of a test on wear resistance when the O/P ratio is changed. In the figure, "hard coat layer" is a sample where no coating of the polysilazane mixture was performed. The samples after the second "hard coat layer" were modified by vacuum ultraviolet irradiation. The comparative example 2 is a sample of the second "hard coat layer".

HAZE≦2% was obtained by vacuum ultraviolet irradiation, and it was found that the O/P ratio was not dependent on the results of the Taber wear test.

### (Experimental Example 2)

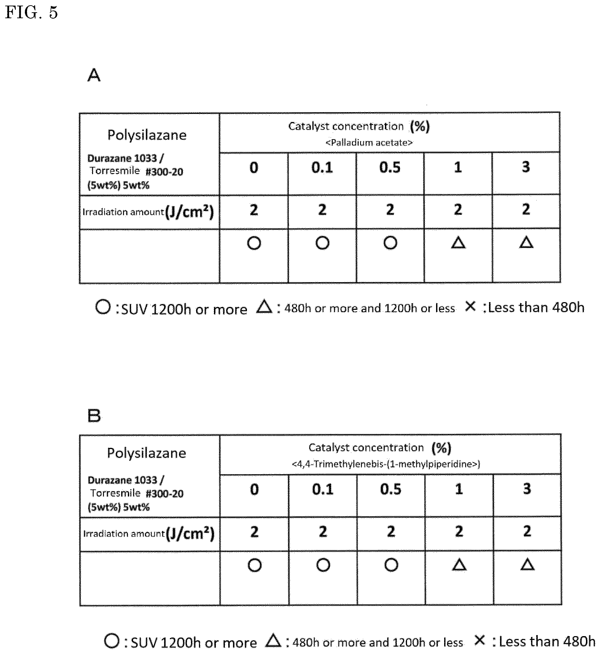

A catalyst may be used to cure the polysilazane mixture applied to the silicone-based resin layer 3. When a polysilazane mixture containing a catalyst was used, the effect of the catalyst on SUV weather resistance was examined. FIG. 5 shows the results of a typical metal-based catalyst: palladium acetate and an amine-based catalyst: 4,4-trimethylenebis- (1-methylpiperidine). The polysilazane mixture used had an O/P ratio of 5 wt% (organic g/inorganic g = 5 g/ 100 g), and the experiment was performed by forming a polysilazane mixture layer 4 having a thickness of 100 nm.

Looking at the results for palladium acetate (FIG. 5A) and 4,4- trimethylenebis-(1-methylpiperidine) (FIG. 5B), there was no difference depending on the type of catalyst. It was also confirmed that the amount of catalyst is 0.5% or less does not affect the SUV weather resistance. The catalyst assumed to be used for the curing of polysilazane is as follows.

### Amine-based:

Ammonia, methylamine, dimethylamine, trimethylamine, ethylamine, diethylamine, triethylamine, n-propylamine, isopropylamine, di-n-propylamine, diisopropylamine, tri-n-propylamine, n-butylamine, isobutylamine, di-n-butylamine, diisobutylamine, tri-n-butylamine, n-pentylamine, di-n-pentylamine, tri-n-pentylamine, dicyclohexylamine, aniline, 2,4-dimethylpyridine, 4,4-trimethylenebis-(1-methylpiperidine), 1,4-diazabicyclo[2.2.2]octane, N,N-dimethylpiperazine, cis-2,6-dimethylpiperazine, trans-2,5-dimethylpiperazine, 4,4-methylenebis(cyclohexylamine), stearylamine, 1,3-di-(4-piperidyl)propane, N,N-dimethylpropanolamine, N,N-dimethylhexanolamine, N,N-dimethyloctanolamine, N,N-diethylethanolamine, 1-piperidineethanol, 4-piperidinol

### Organic acid-based:

Acetic acid, propionic acid, butyric acid, valerian acid, caproic acid

### Metal-based:

Palladium, palladium acetate, palladium-acetylacetonate, palladium propionate, nickel, nickel-acetylacetonate, silver, silver acetate, silver-acetylacetonate, platinum, platinum-acetylacetonate, ruthenium, ruthenium-acetylacetonate, ruthenium-carbonyl, gold, copper, copper-acetylacetonate, aluminum-acetylacetonate, aluminum-tris(ethylacetoacetate)

### (Experimental Example 3)

The effect of increasing the amount of vacuum ultraviolet radiation was examined. The polysilazane mixture used had an O/P ratio of 5 wt% (organic g/inorganic g = 5 g/100 g), and an experiment was performed by forming a polysilazane mixture layer 4 having a film thickness of 100 nm.

The Taber test was performed in accordance with ASTM D1044. The conditions in the wiper test are as follows.
Using a wiper with a length of 400 mm, sand (JIS test powder type 1 (silica sand, particle size 45 to 300 µm)) was dropped into the center of the wipe range at a constant flow rate of 5 mm/min (7.3 g/min) and the wiper was moved 990 round trips (test time: 30min×33 round trips/min).

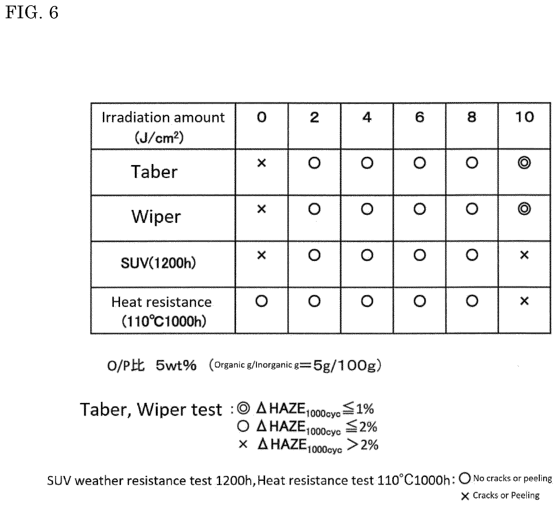

FIG. 6 shows the results. When the irradiation amount of vacuum ultraviolet light became 10 J/cm² or more, cracks or peeling occurred in the SUV weather resistance test and the heat resistance test. Therefore, the irradiation amount of vacuum ultraviolet light is preferably 2 or more and less than 10 J/cm².

In the patent document 4, in the case of a film thickness of 88 nm made of perhydropolysilazane alone, the Taber test results tended to deteriorate when the irradiation amount of vacuum ultraviolet light was 2.9 J/cm² or more. However, in this experimental example 2, in the case of the polysilazane layer 4 having the film thickness of 100 nm, the Taber test results became good by increasing the amount of vacuum ultraviolet light irradiation. When the irradiation amount of vacuum ultraviolet light was 10 J/cm², the Taber test and the wiper test items achieved ΔHAZE ≦ 1%. This is the opposite result to the case of the patent document 4. Therefore, in applications specializing in resistance to the Taber test, it is possible to use vacuum ultraviolet light with an irradiation amount of 10 J/cm² or more.

### (Experimental Example 4)

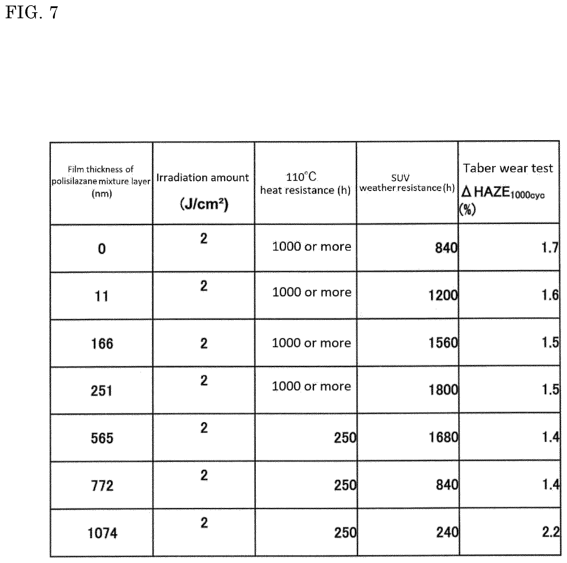

In the above experiments, the film thickness of the polysilazane mixture layer 4 was set to 100 nm, but the heat resistance test, the SUV weather resistance test, and a Taber abrasion test were also performed on layers having other film thicknesses. The results are shown in FIG.7. The O/P ratio was 5 wt% (organic g/inorganic g=5 g/100 g), and the vacuum ultraviolet irradiation amount was 2 J/cm².

As for the heat resistance test, when the film thickness of the polysilazane mixture layer 4 was 565 nm, the target time of 1000 hours was not reached. In addition, regarding the SUV weather resistance, when the film thickness of the polysilazane mixture layer 4 was 772 nm, the target time of 1200 hours was not reached. Therefore, in order to meet the targets for heat resistance and SUV weather resistance, the film thickness is preferably less than 565 nm. On the other hand, even when the film thickness of the polysilazane mixture layer 4 was 11 nm, the SUV weather resistance reached the target of 1200 hours. Therefore, the film thickness of the polysilazane mixture layer 4 may be 11 nm or more and less than 565 nm.

According to this example, it has been found that mixing organopolysilazane with perhydropolysilazane makes it easier to apply the mixture to the silicone-based resin layer 3 than using organopolysilazane alone. Next, the film thickness of the polysilazane mixture layer 4 when vacuum ultraviolet light having a wavelength of 200 nm or less was irradiated from above the applied and cured polysilazane mixture layer 4 was examined, and if the film thickness was less than 565 nm, it was found that a transparent multilayered product having excellent SUV weather resistance could be obtained. In the patent document 4, the limit of the thickness of a film made of perhydropolysilazane alone is 100 nm, but by mixing 5 g of organopolysilazane with 100 g of perhydropolysilazane (5 wt%), the film thickness can be dramatically increased. Since the range of film thickness of the polysilazane mixture layer can be widened, it is possible to increase productivity and control the quality of the film thickness for a wide area and curved surfaces of the windshields of transport machines such as a vehicle, e.g., a motor vehicle or a railroad car, an air plane, or a ship.

In addition, according to this example, the O/P ratio of organopolysilazane and perhydropolysilazane was examined, and it was found that a transparent multilayered product excellent in SUV weather resistance can be obtained if the O/P ratio of the polysilazane mixture layer 4 is 1 wt% or more and 25 wt% or less.

In this example, as the vacuum ultraviolet light having a wavelength of 200 nm or less, light obtained by an excimer laser or excimer lamp having a wavelength of 157 nm (F2 laser), 172 nm (Xe2), and 193 nm (ArF) can be used. By making the penetration depth of the vacuum ultraviolet light into the silicone-based resin layer 3 greater than the film thickness of the polysilazane mixture layer 4, a silicon dioxide film having a larger proportion on the silicone-based resin layer 3 side can be formed.

### DESCRIPTION OF THE REFERENCE NUMERAL

1 Resin substrate
2 Primer layer
3 Silicone-based resin layer
4 Polysilazane mixture layer
10 Transparent multilayered product

## Claims

1. A method for producing transparent multilayered product comprising steps of:
forming silicone-based resin layer on a resin substrate,
forming a polysilazane mixture layer by applying and curing a polysilazane mixture in which a solid content ratio (O/P ratio) of organopolysilazane to perhydropolysilazane is 1 wt% or more and 25 wt% or less on a surface of the silicone-based resin layer, and
modifying a portion of the silicone-based resin layer into a modified film of silicon dioxide through the polysilazane mixture layer by irradiating vacuum ultraviolet light with a wavelength of 200 nm or less from above the polysilazane mixture layer.

2. In the method for producing the transparent multilayered product according to claim 1, wherein the polysilazane mixture layer has a film thickness of 11 nm or more and less than 565 nm.

3. In the method for producing the transparent multilayered product according to claim 1, wherein an irradiation amount of the vacuum ultraviolet light is 2 J/cm² or more and 8 J/cm² or less.
